# EUROPEAN PATENT APPLICATION

(11) **EP 2 485 524 A1**
(43) Date of publication of application: **08.08.2012**
(21) Application number: 09849966.8
(22) Date of filing: 03.12.2009
(51) Int. Cl.: H04W 28/00

(54) **METHOD AND APPARATUS FOR PROCESSING COMMUNICATIONS BETWEEN A NETWORK MANAGEMENT DEVICE AND MOBILE TERMINALS**

(30) Priority: 30.09.2009 WO PCT/CN2009/074344
(71) Applicant: Alcatel Lucent, 75007 Paris (FR)
(72) Inventor: YANG, Tao, Shanghai 201206 (CN)
(74) Representative: 2SPL Patentanwälte
(86) International application number: PCT/CN2009/075287
(87) International publication number: WO 2011/038558

(57) **Abstract**

The invention provides a method, for processing communication with a user equipment, in a network management device of a multi-carrier system. The method includes: activating a first number of independent carriers for a user equipment and allocating user equipment identifiers corresponding to the respective independent carriers respectively for the user equipment; determining whether a second number of dependent carriers are activated for the user equipment; and if so, performing either of: allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or processing information of the user equipment over the respective dependent carriers based upon the user equipment identifier, allocated for the user equipment, corresponding to at least one of the first number of independent carriers.

## Description

### Field of the invention

The present disclosure relates to a method and apparatus for processing communication in a radio communication network and in particular to a method and apparatus for processing communication between a network management device and a user equipment in a multi-carrier radio communication network.

### Background of the invention

Carrier Aggregation (CA) is adopted in the LTE-Advanced (LTEA) as an important technology to improve the performance of a system. The LTEA defines three types of carrier components, i.e., a backward compatible carrier component, a non-backward compatible carrier component and a standalone carrier component. Particularly an LTE-based user equipment (hereinafter LTE user equipment) can access only a backward compatible carrier component, an LTEA-based user equipment (hereinafter LTEA user equipment can access both a backward compatible carrier component and a non-backward compatible carrier component, and a standalone carrier component can not be accessed separately. In other words, an LTEA user equipment can access a standalone carrier component only after it accesses a backward compatible carrier component and/or a non-backward compatible carrier component.

In an LTE system, an LTE user equipment can access only one carrier component, and a network management device, e.g., a base station, etc., allocates a cell temporary identifier (C-RNTI) thereto as a user equipment identifier of the user equipment over the carrier component.

Unlike the LTE system, however, an LTEA system is a multi-carrier system, and as described above, an LTEA user equipment can access a plurality of carrier components. How to ensure proper processing of information in such a multi-carrier system has become a very important issue, and evidently an existing solution with a single carrier in the LTE system can not be applied thereto.

In view of this, there is a need of a new solution to processing communication between a network management device and user equipment.

### Summary of the invention

In order to address the foregoing problem in the prior art, the invention proposes that a network management device shall allocate corresponding user equipment identifiers respectively for respective independent carriers activated for a user equipment. Particularly taking two independent carriers as an example, a first user equipment identifier, allocated for the user equipment, corresponding to the first independent carrier may be the same as or different from a second user equipment identifier corresponding to the second independent carrier. However the network management device allocates for a plurality of user equipments different user equipment identifiers corresponding to the same independent carrier in order to ensure proper processing of information.

Thereafter a dependent carrier may have to be further activated for the user equipment due to an increased resource demand or another reason, and then a user equipment identifier for processing information of the user equipment over the dependent carrier can be available in two implementations, in one of which, similarly to an independent carrier, the network management device furthermore allocates for the user equipment a user equipment identifier corresponding to the newly activated dependent carrier. Particularly those skilled in the art can appreciate that the network management device also allocates for a plurality of user equipments different user equipment identifiers corresponding to the same dependent carrier in order to ensure proper processing of information.

Specifically there is provided according to an embodiment of the invention a method, for processing communication with a user equipment, in a network management device of a multi-carrier system, which includes the steps of: a. activating a first number of independent carriers for a user equipment and allocating user equipment identifiers corresponding to the respective independent carriers respectively for the user equipment; b. determining whether a second number of dependent carriers are activated for the user equipment; and c. if a second number of dependent carriers are activated for the user equipment, performing either of: i. allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or I. processing information of the user equipment over the respective dependent carriers based upon the user equipment identifier, allocated for the user equipment, corresponding to at least one of the first number of independent carriers; wherein any one of the allocated user equipment identifiers is unique over its corresponding carrier.

Preferably in the step I, the user equipment identifier for processing the information of the user equipment over any one of the dependent carriers corresponds to the independent carrier over which the network management device transmits control signaling corresponding to the dependent carrier to the user equipment.

More preferably in the step I, the user equipment identifier for processing the information of the user equipment over any one of the dependent carriers corresponds to the independent carrier over which the network management device transmits resource allocation information corresponding to the dependent carrier to the user equipment.

Preferably the method further includes the steps of: determining whether there is one or more independent carriers or dependent carriers deactivated for the user equipment; and if there is at least one independent carrier or dependent carrier deactivated for the user equipment, instructing the user equipment to release the previously allocated user equipment identifier or identifiers corresponding to the one or more independent carriers or dependent carriers.

According to another embodiment of the invention, there is provided a method, for communicating with a network management device, in a user equipment of a multi-carrier system, which includes the steps of: 1. receiving user equipment identifiers transmitted from the network management device, which correspond to a first number of independent carriers activated for the user equipment; m. when the network management device activates a second number of dependent carriers for the user equipment, performing either of: x. receiving user equipment identifiers transmitted from the network management device, which correspond to the respective dependent carriers, and for each of the dependent carriers, processing information of the user equipment over the dependent carrier based upon the user equipment identifier, allocated for the user equipment, corresponding to the dependent carrier; or y. processing information of the user equipment over the respective dependent carriers based upon the received user equipment identifier corresponding to at least one of the first number of independent carriers.

Preferably in the step y, the user equipment identifier for processing the information of the user equipment over any one of the dependent carriers corresponds to the independent carrier over which the network management device transmits control signaling corresponding to the dependent carrier to the user equipment.

More preferably in the step y, the user equipment identifier for processing the information of the user equipment over any one of the dependent carriers corresponds to the independent carrier over which the network management device transmits resource allocation information corresponding to the dependent carrier to the user equipment.

According to another embodiment of the invention, there is provided a first apparatus, for processing communication with a user equipment, in a network management device of a multi-carrier system, which includes: a first unit for activating a first number of independent carriers for a user equipment and allocating user equipment identifiers corresponding to the respective independent carriers respectively for the user equipment; determining means for determining whether a second number of dependent carriers are activated for the user equipment; and a second unit for, if a second number of dependent carriers are activated for the user equipment, performing either of: - allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or - processing information of the user equipment over the respective dependent carriers based upon the user equipment identifier, allocated for the user equipment, corresponding to at least one of the first number of independent carriers; wherein any one of the allocated user equipment identifiers is unique over its corresponding carrier.

Preferably the user equipment identifier for the second unit to process the information of the user equipment over any one of the dependent carriers corresponds to the independent carrier over which the network management device transmits control signaling corresponding to the dependent carrier to the user equipment.

More preferably the user equipment identifier for the second unit to process the information of the user equipment over any one of the dependent carriers corresponds to the independent carrier over which the network management device transmits resource allocation information corresponding to the dependent carrier to the user equipment.

Preferably the determining means is further for determining whether there is one or more independent carriers or dependent carriers deactivated for the user equipment; and instructing means is further included for, if there is at least one independent carrier or dependent carrier deactivated for the user equipment, instructing the user equipment to release the previously allocated user equipment identifier or identifiers corresponding to the one or more independent carriers or dependent carriers.

According to a further embodiment of the invention, there is provided a second apparatus, for communicating with a network management device, in a user equipment of a multi-carrier system, which includes: receiving means for receiving user equipment identifiers transmitted from the network management device, which correspond to a first number of independent carriers activated for the user equipment; a third unit for, when the network management device activates a second number of dependent carriers for the user equipment, performing either of: - receiving user equipment identifiers, transmitted from the network management device, corresponding to the respective dependent carriers, and for each of the dependent carriers, processing information of the user equipment over the dependent carrier based upon the user equipment identifier, allocated for the user equipment, corresponding to the dependent carrier; or - processing information of the user equipment over the respective dependent carriers based upon the received user equipment identifier corresponding to at least one of the first number of independent carriers.

Preferably the user equipment identifier for the third unit to process the information of the user equipment over any one of the dependent carriers corresponds to the independent carrier over which the network management device transmits resource allocation information corresponding to the dependent carrier to the user equipment.

According to an aspect of the invention, there is provided a network management device including the foregoing first apparatus.

According to an aspect of the invention, there is provided a user equipment including the foregoing second apparatus.

In order to facilitate understanding of the invention, some concepts appearing in this context will be explained below:
Activated: A carrier being activated for a user equipment means that a radio resource over the carrier is allocated to the user equipment, and correspondingly a carrier being deactivated for a user equipment means that a network management device withdraws a radio resource, over the carrier, previously allocated to the user equipment, and thereafter the carrier is deactivated with respect to the user equipment.

Independent carrier and dependent carrier: in this context, a carrier in a carrier component which can be accessed separately is referred to as an independent carrier, and a carrier in a carrier component which can not be accessed separately is referred to as a dependent carrier. Those skilled in the art can appreciate that in this context, an independent carrier will not be limited to a carrier in a backward compatible carrier component or a non-backward compatible carrier component, and a dependent carrier will not be limited to a carrier in an independent carrier component. Taking an LTEA system as an example, a plurality of carriers can be included throughout the radio frequency band, and one or more of these carriers belong to an independent carrier while another one or more belong to a dependent carrier. The idea of the invention is not influence by the particular categorizing of Carriers. In the invention, a typical example of a dependent carrier is a carrier in an independent carrier component over which no control signaling is carried.

First number and second number: the foregoing first number can take an integer of or above 1.

User equipment identifier: for performing uplink or downlink communication, a user equipment identifier shall be allocated to a user equipment so that the user equipment can know from resource allocation information indicated by the user equipment identifier the use of a specific radio resource, e.g., a specific frequency, timeslot, pseudo code, etc., for communication with the network management device. Different user equipment identifiers shall be allocated to different user equipments over the same carrier in order to distinguish uplink and downlink information of one user equipment effectively from one another. User equipment identifiers of user equipments can be multiplexed between different carriers without any confliction.

Network management device: it refers to a variety of network devices, e.g., a base station, etc., for communication with a user equipment and performing management responsibility. Along with the development in the field of radio communications, it may be denominated and embodied differently, but a network management device in this context shall be construed to encompass various reasonable variations.

Processing of information: in this context, processing of information includes but will not be limited to encoding and decoding of signaling or data, and another process of signaling of data at the physical layer.

Multi-carrier system: a multi-carrier system as mentioned in this context refers to a system where there are a plurality of carriers even if only one of the carriers is indeed in use at present.

The foregoing and other concepts and definitions will become more apparent and readily understood upon reading the following further detailed description in this context

In the invention, user equipment identifiers are allocated in a multi-carrier system and a solution is provided for a dependent carrier to thereby enable effectively processing of information over a plurality of carriers to be supported. Furthermore a user equipment identifier, allocated for a user equipment, corresponding to one carrier can be used as a user equipment identifier, of the user equipment or another user equipment, corresponding to another carrier, so the number of supported user equipments is increased significantly.

### Brief description of drawings

Other features and advantages of the invention will become more apparent and evident from the following description of at least one non-limiting embodiment of the invention with reference to the drawings in which:
Fig.1 illustrates a radio communication network;
Fig.2 illustrates a distribution of carriers according to an embodiment of the invention;
Fig.3a illustrates a flow chart of a systematic method for processing communication between a network management device and a user equipment in a multi-carrier system according to an embodiment of the invention;
Fig.3b illustrates a flow chart of a systematic method for processing communication between a network management device and a user equipment in a multi-carrier system according to another embodiment of the invention;
Fig.4 illustrates a block diagram of a first apparatus, for processing communication with a user equipment, in a network management device of a multi-carrier system; and
Fig.5 illustrates a block diagram of a second apparatus, for communicating with a network management device, in a user equipment of a multi-carrier system.

Identical or similar reference numerals denote identical or similar technical features throughout the drawings.

### Detailed description of embodiments

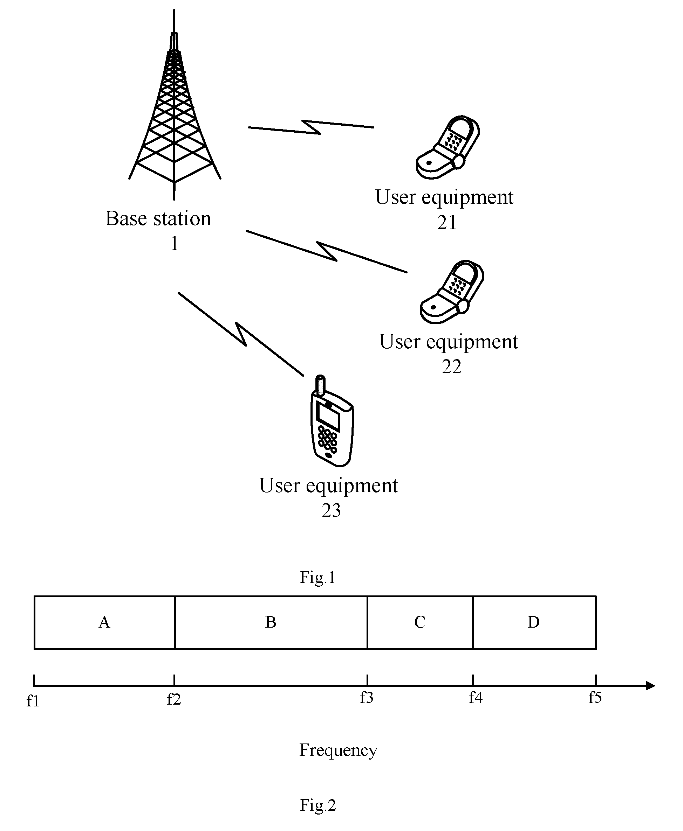

A typical application scenario of the invention is as illustrated in Fig.1, where a base station 1 serves a plurality of user equipments in a cell, but only user equipments 21 to 23 are illustrated for conciseness. A network illustrated in Fig.1 operates particularly in a multi-carrier environment, and four carriers as illustrated in Fig.2 are defined without loss of generality, where a carrier A is located between frequencies f1 and f2, a carrier B is located between frequencies f2 and f3, a carrier C is located between frequencies f3 and f4, and a carrier D is located between frequencies f4 and f5. The number of carriers in Fig.2 shall not be construed as limiting the scope of the invention, and in a practical application of the invention, there are a larger or smaller number (e.g., three, etc.) of carriers available to a base station. Importantly, categorization of carriers in the prior art can readily be applicable to the invention.

Without loss of generality, the base station 1 and the user equipments 21 to 23 belong to an LTEA system, and furthermore the carriers A and B in Fig.2 are defined to belong to a backward compatible carrier component, the carrier C belongs to a non-backward compatible carrier component, and the carrier D belongs to a standalone carrier component. Then in this example the carriers A, B and C are independent carriers and also referred below to as independent carriers A, B and C, and the carrier D is a dependent carrier and also referred to as a dependent carrier.

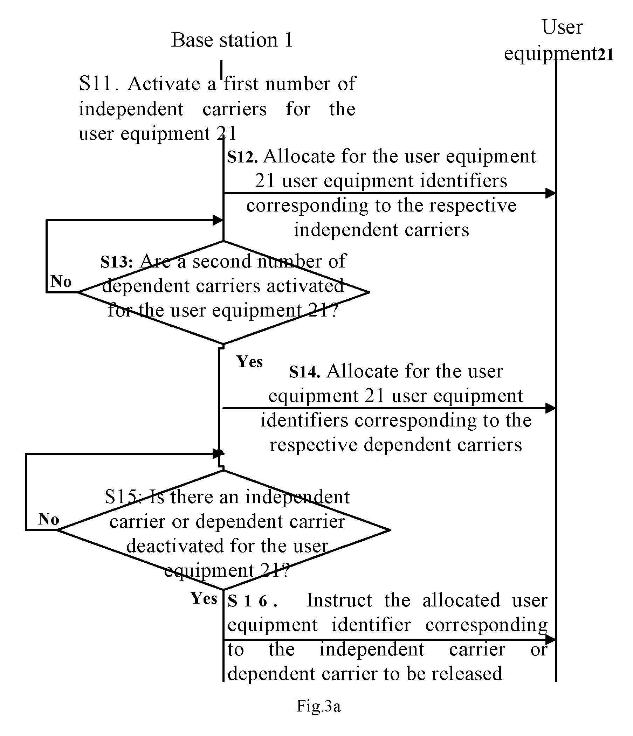

With knowledge of the application scenario of the invention, a method according to the invention will be introduced in details with reference to a flow chart. Fig.3a illustrates a flow chart of a systematic method for processing communication between a network management device and a user equipment in a multi-carrier system according to an embodiment of the invention with reference to Fig.1 and Fig.2 and primarily taking the base station 1 and the user equipment 21 as an example.

The flow illustrated in Fig.3a starts with the step S11, where the base station 1 activates a first number of independent carriers for the user equipment 21 during a random access process. Here the number of activated independent carriers depends upon a resource demand of the user equipment 21 and categorization of carriers. In an embodiment of the invention, the base station 1 can activate firstly a carrier A for the user equipment 21 and then another carrier, e.g., the carrier B, etc., for the user equipment 21 when the carrier A can not satisfy a traffic demand of the user equipment 21.

As a result the independent carrier A is activated for the user equipment 21 in the step S11 in this example.

Then user equipment identifiers corresponding to the respective independent carriers are allocated for the user equipment 21 in the step S12 as depicted in Table 1 in which allocated user equipment identifiers of another user equipment 23 are also depicted for the convenience of their comparison.

**Table 1: Allocated user equipment identifiers of user equipments**

| | User equipment 21 | User equipment 23 |
|---|---|---|
| Independent carrier A | 0001 | 0000 |
| Independent carrier B | Deactivated | 0000 |
| Independent carrier C | Deactivated | 0000 |
| Dependent carrier D | Deactivated | Deactivated |

As can be apparent from Table 1, the base station 1 allocates for different user equipments different user equipment identifiers corresponding to the same independent carrier. For the same user equipment, the base station 1 may allocate thereto the same or different user equipment identifiers corresponding to different independent carriers. Furthermore if an independent carrier is deactivated for a user equipment, then the user equipment 23 will release a corresponding user equipment identifier, which can then be allocated to another user equipment as a user equipment identifier corresponding to the independent carrier without any collision.

Although the step S11 and the step S12 are illustrated in Fig.3a as being performed in that order, those skilled in the art can appreciate that a corresponding user equipment identifier can be allocated immediately after an independent carrier is activated and thereafter the next independent carrier can be activated and a corresponding user equipment identifier can be allocated thereto.

For an LTE user equipment, e.g., the use equipment 22 illustrated in Fig.1, etc., the base station 1 allocates user equipment identifiers for the user equipment 22 when a plurality of independent carriers, e.g., the carriers A and B, etc., are activated for the user equipment, where the user equipment identifier corresponding to the carrier A may be the same or different from the user equipment identifier corresponding to the carrier B.

At the side of the user equipment 21, it receives correspondingly the respective user equipment identifiers transmitted from the base station 1, and specifically the process of allocating the user equipment identifiers illustrated in Fig.3a can be embodied as an RACH transmission process already existing in an LTE system and continuing its use in the LTEA system.

After acquiring the user equipment identifier 0001 corresponding to the independent carrier A, the user equipment 21 can use this identifier to perform a series of processes at the physical layer including decoding and other processes on all the information transmitted over the independent carrier A from the base station 1 and can use this identifier to perform a series of processes at the physical layer including encoding and other processes on all the information to be transmitted over the independent carrier A to the base station. The information includes signaling, data, etc., over a Physical Downlink Control Channel (PDCCH) and a Physical Downlink Shared Channel (PDSCH).

Thereafter the user equipment 21 has an increased amount of traffic which may not be accommodated only over the independent carrier A, thus resulting in a loss of packages or another adverse condition due to blockage of information, and then the base station 1 preferably further activates another carrier besides the independent carrier A for the user equipment 21, where there may be different criteria for selecting another carrier differently, for example, possibly by activating a carrier in an order of ascending frequencies or randomly, and furthermore a dependent carrier can be used in the event that independent carriers have been exhausted, but the invention will not be limited thereto.

In this example a carrier is activated in an order of ascending frequencies without loss of generality, and with an increasing traffic demand of the user equipment 21, the independent carriers B and C at a higher frequency than the independent carrier A are also activated sequentially for the user equipment 21, and thus the base station 1 allocates corresponding user equipment identifiers thereto. Assumed there is no change in the allocated user equipment identifiers of the user equipment 23, a new condition of allocated user equipment identifiers is as depicted in Table 2:
Table 2: Allocated user equipment identifiers of user equipments

| | User equipment 21 | User equipment 23 |
|---|---|---|
| Independent carrier A | 0001 | 0000 |
| Independent carrier B | 0001 | 0000 |
| Independent carrier C | 0010 | 0000 |
| Dependent carrier D | Deactivated | Deactivated |

Table 2 further demonstrates that the same or different user equipment identifiers corresponding to different carriers can be allocated for the same user equipment.

In this example the base station 1 transmits the user equipment identifiers 0001 and 0010 corresponding to the independent carriers B and C in RRC signaling, and the user equipment 21 uses these two identifiers to process information of the user equipment over the corresponding independent carriers upon reception thereof, where the information includes signaling, data, etc., over a PDCCH and a PDCSH.

The step S13 is a determination step triggered under a condition varying from one implementation to another. For example, when a carrier is activated in an order of ascending frequencies, the dependent carrier D in Fig.2 is at the highest frequency without any limiting, so it can be activated only after all the independent carriers have been activated for the user equipment 21, and therefore determination in the step S13 can be triggered to perform after all the independent carriers have been activated to thereby facilitate saving hardware resources at the base station 1; and differently, if a carrier is triggered randomly or otherwise so that the dependent carrier D is triggered with the same chance as an independent carrier, the step S13 will be performed periodically after the step S11, and there is a wait period of time or another determination made immediately when the condition is not satisfied.

Regardless of whatever order in which a carrier is triggered, the base station 1 will allocate for the user equipment 21 user equipment identifiers corresponding to a second number of dependent carriers in the step S 14 after the base station triggers these dependent carriers for the user equipment 21. In this example, the second number takes a value of 1, and those skilled in the art can appreciate that if the number of dependent carriers is 3, for example, which is different from that illustrated in Fig.2, then the second number here can take a value of 3.

Then the allocated user equipments after the step S14 are as depicted in Table 3, where assumed there is also an increased traffic demand of the user equipment 23, the base station 1 also activates the dependent carrier D for the user equipment:

**Table 3: Allocated user equipment identifiers of user equipments**

| | User equipment 21 | User equipment 23 |
|---|---|---|
| Independent carrier A | 0001 | 0000 |
| Independent carrier B | 0001 | 0000 |
| Independent carrier C | 0010 | 0000 |
| Dependent carrier D | 0001 | 0010 |

As can be seen from Table 3, the user equipment identifiers, allocated for the different user equipments, corresponding to the same dependent carrier are preferably different from each other, the same as the independent carriers. For the same user equipment, the base station 1 allocates thereto the same user equipment identifier corresponding to the independent carriers A and B and the dependent carrier D to thereby save such a resource of user equipment identifiers. Of course those skilled in the art can appreciate that the user equipment identifiers, allocated to the user equipment 21, corresponding to the different carriers may alternatively be different from each other if such a resource of user equipment identifiers is not insufficient.

The user equipment 21 can use the user equipment identifier 0001 corresponding to the dependent carrier D to process information over the dependent carrier D, e.g., encoding, decoding and other operations at the physical layer, upon reception of the identifier 0001 corresponding to the dependent carrier D. Taking the LTEA system as an example, the user equipment 21 firstly uses a user equipment identifier corresponding to an independent carrier for transmission PDCCH, e.g., the independent carrier A, etc., to decode the PDCCH and thereby locate a radio resource for transmission PDSCH, and thereafter the user equipment 21 uses a user equipment identifier corresponding to a carrier where the radio resource for transmission PDSCH is located to decode the PDSCH.

The step S15 is another determination process where the base station 1 determines whether at least one of the respective independent carriers or dependent carriers activated for the user equipment 21 is deactivated for the user equipment 21. This situation arises typically due to a decreased amount of traffic of the user equipment 21, or a power-off mode of the user equipment 21, etc. Particularly an activated carrier can be deactivated for a decreased amount of traffic of the user equipment 21 in an order of descending frequencies, randomly or otherwise, and the invention will not be limited in this respect. Those skilled in the art shall appreciate that in view of the presence of a dependent carrier, it will be deactivated in priority preferentially because it can not be accessed separately; or in view of its presence, there will be at least one independent carrier activated all the time.

In this example, the dependent carrier 21 will be deactivated for the user equipment 21 without loss of generality, and then the base station 1 instructs the user equipment, possibly in RRC signaling, to release the allocated user equipment identifier 0001 corresponding to the dependent carrier D in the step S16. Thereafter the user equipment identifier 0001 can be allocated to another user equipment for the dependent carrier D without any interference/confusion. Of course, if it is not used by any other user equipment for the dependent carrier D and the user equipment 21 has a significantly increased amount of traffic again at a later time, then 0001 can be allocated thereto again, or if 0001 has been used by another user equipment for the dependent carrier D at that time, then another user equipment identifier can be allocated for the user equipment 21, and a repeated description thereof will be omitted here.

Those skilled in the art can appreciate that although the steps S 15 and S16 are illustrated in Fig.3a after the steps S13 and S14, this does not mean that the step S15 can be performed only after a dependent carrier is activated for the user equipment 21, but actually the step S 15 can be performed after the step S12 and even the step S 11. A carrier addressed in the step S 15 varies from one stage to another because a carrier activated for the user equipment 21 varies from one stage to another stage.

In the embodiment described above with reference to Fig.3a, the base station 1 allocates for the user equipment 21 user equipment identifiers corresponding to a second number of dependent carriers after these dependent carriers are activated for the user equipment 21. An alterative to this embodiment will be described below.

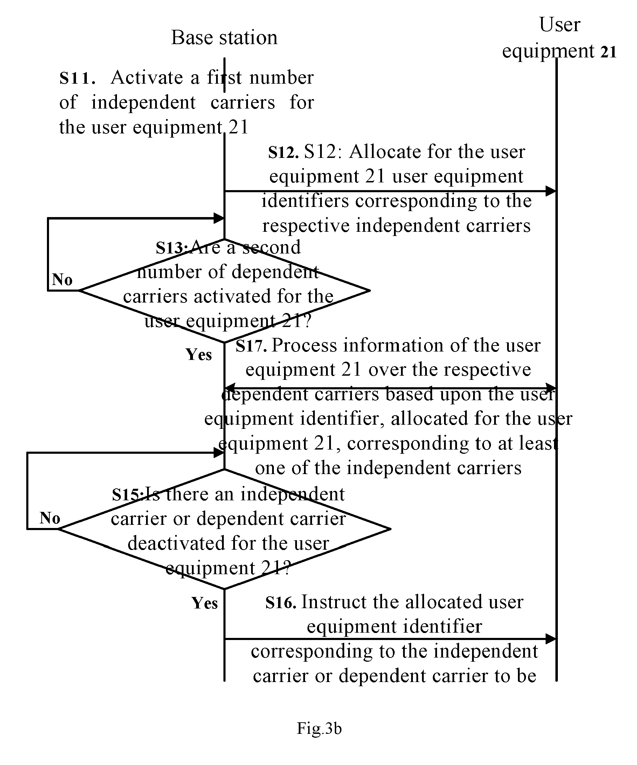

In Fig.3b, identical or similar parts to those in Fig.3a have been denoted with the same reference numerals as those in Fig.3a, and a repeated description thereof will be omitted here. The step S17 different from Fig.3a will be described below with emphasis. It shall be appreciated that larger or smaller reference numerals in this context will not necessarily indicate an exact sequential order between steps, as suggested in this context.

In this example, the base station 1 will not allocate specifically for the user equipment 21 a user equipment identifier corresponding to the dependent carrier D activated for the user equipment 21 as in the step S14 of Fig.3a. Instead, information of the user equipment 21 over the dependent carrier D is processed between the base station 11 and the user equipment 21 based upon a previously allocated user equipment identifier corresponding to the independent carrier.

For each dependent carrier activated for the user equipment 21, it is desired to address the issue of determining which specific independent carrier that a user equipment identifier, corresponding thereto, allocated for the user equipment 21 will be used. Typically the user equipment identifier for processing the information of the user equipment 21 over the dependent carrier D corresponds to the independent carrier over which the base station 1 transmits control signaling corresponding to the dependent carrier D to the user equipment 21. More typically the user equipment identifier for processing the information of the user equipment 21 over the dependent carrier D corresponds to the independent carrier over which the base station 1 transmits resource allocation information corresponding to the dependent carrier D to the user equipment 21. Specifically, the user equipment 21 operating in the scheme illustrated in Fig.3b has been preset so that it can cooperate smoothly with the base station 1 to perform the flow illustrated in Fig.3b, and in the step S17, the user equipment 21 discovers an allocated resource over the dependent carrier D while using a user equipment identifier corresponding to an independent carrier, e.g., the independent carrier A, etc., to decode a PDCCH, and then the user equipment 21 uses the user equipment identifier corresponding to the independent carrier A to decode a PDSCH over the dependent carrier D.

Apparatuses, according to the invention, corresponding to the foregoing methods will be described below in block diagrams but briefly, in view of a correspondence relationship between the features of modules/means and the features of steps in the foregoing methods.

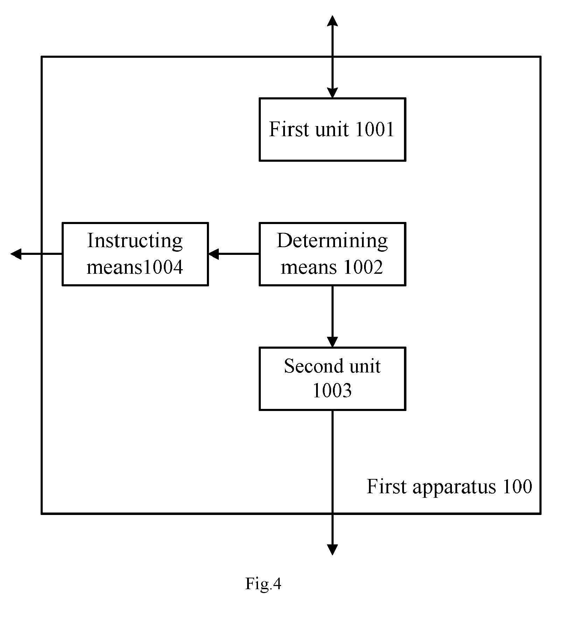

Fig.4 illustrates a block diagram of a first apparatus, for processing communication with a user equipment, in a network management device of a multi-carrier system, and the illustrated first apparatus 100 is typically located in the base station 1 illustrated in Fig.1 and includes:
A first unit 1001 for activating a first number of independent carriers for a user equipment and allocating user equipment identifiers corresponding to the respective independent carriers respectively for the user equipment in correspondence to the foregoing steps S11 and S12;

A determining means 1002 for determining whether a second number of dependent carriers are activated for the user equipment in correspondence to the foregoing step S 13; and

A second unit 1003 for, if a second number of dependent carriers are activated for the user equipment, performing either of the following operations in correspondence to the steps S14 and S17:
- Allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or
- Processing information of the user equipment over the respective dependent carriers based upon the user equipment identifier, allocated for the user equipment, corresponding to at least one of the first number of independent carriers;

Wherein any one of the allocated user equipment identifiers is unique over its corresponding carrier.

Preferably the user equipment identifier for the second unit 1003 to process the information of the user equipment over any one of the dependent carriers corresponds to the independent carrier over which the network management device transmits control signaling corresponding to the dependent carrier to the user equipment.

More preferably the user equipment identifier for the second unit 1003 to process the information of the user equipment over any one of the dependent carriers corresponds to the independent carrier over which the network management device transmits resource allocation information corresponding to the dependent carrier to the user equipment.

According to an embodiment of the invention, the determining means 1002 in the first apparatus 100 is further for determining whether there is one or more independent carriers or dependent carriers deactivated for the user equipment in correspondence to the foregoing step S 15; and

The first apparatus 100 further includes:
Instructing means 1004 for, if there is at least one independent carrier or dependent carrier deactivated for the user equipment, instructing the user equipment to release the previously allocated user equipment identifier or identifiers corresponding to the one or more independent carriers or dependent carriers in correspondence to the foregoing step S16.

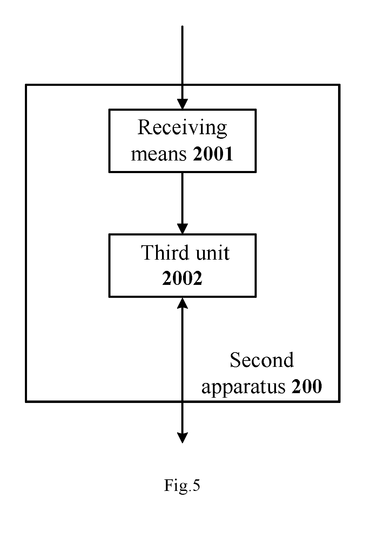

Fig.5 illustrates a block diagram of a second apparatus, for communicating with a network management device, in a user equipment of a multi-carrier system, and the illustrated second apparatus 200 is typically located in the user equipments 21, 22 and 23 illustrated in Fig.1. Taking an LTEA system as an example, the user equipments 21 and 23 are multi-carrier enabled LTEA user equipment and thus provided with the second apparatus 200. For an LTE user equipment, i.e., the user equipment 22, for which no dependent carrier is involved, the second apparatus 200 therein can be relatively simple and it only requires to support the steps S12 and S16 and process information over an independent carrier together with the base station 1.

The second apparatus 200 includes:
A receiving means 2001 for receiving user equipment identifiers transmitted from the network management device, which correspond to a first number of independent carriers activated for the user equipment in correspondence to the step S12;
A third unit 2002 for, when the network management device activates a second number of dependent carriers for the user equipment, performing either of the following operations in correspondence to the steps S 14 and S 17:
   - Receiving user equipment identifiers, transmitted from the network management device, corresponding to the respective dependent carriers, and for each of the dependent carriers, processing information of the user equipment over the dependent carrier based upon the user equipment identifier, allocated for the user equipment, corresponding to the dependent carrier; or
   - Processing information of the user equipment over the respective dependent carriers based upon the received user equipment identifier corresponding to at least one of the first number of independent carriers.

Preferably the user equipment identifier for the third unit 2002 to process the information of the user equipment over any one of the dependent carriers corresponds to the independent carrier over which the network management device transmits resource allocation information corresponding to the dependent carrier to the user equipment.

As can be apparent to those skilled in the art, the invention will not be limited to the details of the foregoing illustrative embodiments and can be embodied in other specific forms without departing from the spirit or essence of the invention. Therefore the embodiments shall be construed in any respect as being illustrative but not limiting, and the scope of the invention will be defined in the appended claims instead of the foregoing description, so the invention is intended to encompass all the variations coming into the scope of the claims and their equivalents. Any reference numerals in the claims shall not be construed as limiting the claims in which they appear. It will be also apparent that the term "comprising" will not preclude another element(s) or step(s) and a singular form will not preclude a plural form. A plurality of units or means recited in a claim of a system can alternatively be embodied in software or hardware as a single unit or means. The words "first", "second", etc., represent names but do not mean any specific order.

## Claims

1. A method, for processing communication with a user equipment, in a network management device of a multi-carrier system, comprising the steps of:
a. activating a first number of independent carriers for a user equipment and allocating user equipment identifiers corresponding to the respective independent carriers respectively for the user equipment;
b. determining whether a second number of dependent carriers are activated for the user equipment; and
c. if a second number of dependent carriers are activated for the user equipment, performing either of:
i. allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or
I. processing information of the user equipment over the respective dependent carriers based upon the user equipment identifier, allocated for the user equipment, corresponding to at least one of the first number of independent carriers;
wherein any one of the allocated user equipment identifiers is unique over its corresponding carrier.

2. The method according to claim 1, wherein in the step I, the user equipment identifier for processing the information of the user equipment over any one of the dependent carriers corresponds to the independent carrier over which the network management device transmits control signaling corresponding to the dependent carrier to the user equipment.

3. The method according to claim 2, wherein in the step I, the user equipment identifier for processing the information of the user equipment over any one of the dependent carriers corresponds to the independent carrier over which the network management device transmits resource allocation information corresponding to the dependent carrier to the user equipment.

4. The method according to any one of claims 1 to 3, further comprising the steps of:
- determining whether there is one or more independent carriers or dependent carriers deactivated for the user equipment; and
- if there is at least one independent carrier or dependent carrier deactivated for the user equipment, instructing the user equipment to release the previously allocated user equipment identifier or identifiers corresponding to the one or more independent carriers or dependent carriers.

5. A method, for communicating with a network management device, in a user equipment of a multi-carrier system, comprising the steps of:
1. receiving user equipment identifiers transmitted from the network management device, which correspond to a first number of independent carriers activated for the user equipment;
m. when the network management device activates a second number of dependent carriers for the user equipment, performing either of:
x. receiving user equipment identifiers transmitted from the network management device, which correspond to the respective dependent carriers, and for each of the dependent carriers, processing information of the user equipment over the dependent carrier based upon the user equipment identifier, allocated for the user equipment, corresponding to the dependent carrier; or
y. processing information of the user equipment over the respective dependent carriers based upon the received user equipment identifier corresponding to at least one of the first number of independent carriers.

6. The method according to claim 5, wherein in the step y, the user equipment identifier for processing the information of the user equipment over any one of the dependent carriers corresponds to the independent carrier over which the network management device transmits control signaling corresponding to the dependent carrier to the user equipment.

7. The method according to claim 6, wherein in the step y, the user equipment identifier for processing the information of the user equipment over any one of the dependent carriers corresponds to the independent carrier over which the network management device transmits resource allocation information corresponding to the dependent carrier to the user equipment.

8. A first apparatus, for processing communication with a user equipment, in a network management device of a multi-carrier system, comprising:
a first unit for activating a first number of independent carriers for a user equipment and allocating user equipment identifiers corresponding to the respective independent carriers respectively for the user equipment;
determining means for determining whether a second number of dependent carriers are activated for the user equipment; and
a second unit for, if a second number of dependent carriers are activated for the user equipment, performing either of:
- allocating user equipment identifiers corresponding to the respective dependent carriers respectively for the user equipment, and for each of the dependent carriers, processing information of the user equipment over the dependent carrier based upon the user equipment identifier, allocated for the user equipment, corresponding to the dependent carrier; or
- processing information of the user equipment over the respective dependent carriers based upon the user equipment identifier, allocated for the user equipment, corresponding to at least one of the first number of independent carriers;
wherein any one of the allocated user equipment identifiers is unique over its corresponding carrier.

9. The first apparatus according to claim 8, wherein the user equipment identifier for the second unit to process the information of the user equipment over any one of the dependent carriers corresponds to the independent carrier over which the network management device transmits control signaling corresponding to the dependent carrier to the user equipment.

10. The first apparatus according to claim 9, wherein the user equipment identifier for the second unit to process the information of the user equipment over any one of the dependent carriers corresponds to the independent carrier over which the network management device transmits resource allocation information corresponding to the dependent carrier to the user equipment.

11. The first apparatus according to any one of claims 8 to 10, wherein:
the determining means is further for determining whether there is one or more independent carriers or dependent carriers deactivated for the user equipment; and
instructing means is further comprised for, if there is at least one independent carrier or dependent carrier deactivated for the user equipment, instructing the user equipment to release the previously allocated user equipment identifier or identifiers corresponding to the one or more independent carriers or dependent carriers.

12. A second apparatus, for communicating with a network management device, in a user equipment of a multi-carrier system, comprising:
receiving means for receiving user equipment identifiers transmitted from the network management device, which correspond to a first number of independent carriers activated for the user equipment;
a third unit for, when the network management device activates a second number of dependent carriers for the user equipment, performing either of:
- receiving user equipment identifiers, transmitted from the network management device, corresponding to the respective dependent carriers, and for each of the dependent carriers, processing information of the user equipment over the dependent carrier based upon the user equipment identifier, allocated for the user equipment, corresponding to the dependent carrier; or
- processing information of the user equipment over the respective dependent carriers based upon the received user equipment identifier corresponding to at least one of the first number of independent carriers.

13. The second apparatus according to claim 12, wherein the user equipment identifier for the third unit to process the information of the user equipment over any one of the dependent carriers corresponds to the independent carrier over which the network management device transmits resource allocation information corresponding to the dependent carrier to the user equipment.

14. A network management device of a multi-carrier system, comprising the first apparatus according to any one of claims 8 to 11.

15. A user equipment device of a multi-carrier system, comprising the second apparatus according to claim 12 or 13.
